# EUROPEAN PATENT APPLICATION

(11) **EP 4 822 219 A1**
(43) Date of publication of application: **14.10.2026**
(21) Application number: 25168821.4
(22) Date of filing: 07.04.2025
(51) Int. Cl.: F16J 1/00, F16J 15/02, F21V 31/00, H01R 27/00, H01R 31/06, F16L 37/08, H02G 3/08, H02G 15/013

(54) **A SEALING ASSEMBLY**

(71) Applicant: Vaisala, OYJ, 00421 Helsinki (FI)
(72) Inventor: KUJALA, Joona, 02970 ESPOO (FI)
(74) Representative: Berggren Oy

(57) **Abstract**

According to an example embodiment, a sealing assembly (100) is provided, the sealing assembly (100) comprising: a tubular casing unit (110) comprising a first tubular portion (111b) and a second tubular portion (111c) having different maximum outer diameters and a sealing ridge (111a) shaped as a collar that radially extends from an outer side of the tubular casing unit (110), wherein the sealing ridge (111a) is configured to at least partially deform in response to a threshold-exceeding force being applied thereto; a base unit (120) for receiving the tubular casing unit (110), the base unit (120) comprising a recess portion (121a) arranged for receiving the tubular casing unit (110) via its first end and, having, in its second end, an aperture (121b) configured to allow for the first tubular portion (111b) to at least partially protrude therethrough, and wherein the recess portion (121a) has having a shape and size configured to accommodate the sealing ridge (111a) and the second tubular portion (111c) in a concentric manner; and a locking member (130) for mounting to the first end of the base unit (120) to exert a force that presses the sealing ridge (111a) against the second end at the recess portion (121a) when the tubular casing unit (110) is inserted into the recess portion (121a), thereby forming a gas-tight seal between the tubular casing unit (110) and the base unit (120).

## Description

### TECHNICAL FIELD

The present invention relates to a sealing assembly that is applicable for providing a gas-tight sealing.

### BACKGROUND

A sealing arrangement that ensures a gas-tight sealing between two spaces is applicable for variable purposes. Non-limiting examples in this regard include sealing assemblies that are useable for securing gas-tight sealing of vessels that are applied to store gaseous substances and for securing enclosures that are useable for measurements carried out in carefully controlled special atmospheres. Examples of the latter involve measurements carried out in a vacuum or in an atmosphere that has a specific gas pressure and/or that includes a certain carefully controlled gas mixture.

While for some application scenarios providing the gas-tight sealing is sufficient, e.g. in measurement scenarios the gas-tight sealing assembly may be further applied to provide electrical connections between an electrical measurement apparatus operated in the special atmosphere and a supporting apparatus operated in the surrounding atmosphere (such as ambient air) to enable transfer of control information and/or data between the apparatuses and/or supply of operating power to the electrical measurement apparatus. A sealing assembly that provides a gas-tight sealing and also provides an electrical connection therethrough may be referred to as a gas-tight electrical feedthrough.

An apparent challenge with such gas-tight sealing assemblies, without or without the electrical connections therethrough, is ensuring the gas-tight sealing between the special atmosphere and the surrounding atmosphere (e.g. ambient air) in scenarios where the gas-tight sealing assembly allows for opening and closing the sealing e.g. to allow for maintenance operations and/or replacement of components involved in operations carried out in the special atmosphere.

### SUMMARY

It is an object of the present invention to provide an improved sealing assembly that provides a gas-tight sealing.

According to an example embodiment, a sealing assembly is provided, the sealing assembly comprising: a tubular casing unit comprising a first tubular portion and a second tubular portion having different maximum outer diameters and a sealing ridge shaped as a collar that radially extends from an outer side of the tubular casing unit, wherein the sealing ridge is configured to at least partially deform in response to a threshold-exceeding force being applied thereto; a base unit for receiving the tubular casing unit, the base unit comprising a recess portion arranged for receiving the tubular casing unit via its first end and, having, in its second end, an aperture configured to allow for the first tubular portion to at least partially protrude therethrough, and wherein the recess portion has having a shape and size configured to accommodate the sealing ridge and the second tubular portion in a concentric manner; and a locking member for mounting to the first end of the base unit to exert a force that presses the sealing ridge against the second end at the recess portion when the tubular casing unit is inserted into the recess portion, thereby forming a gas-tight seal between the tubular casing unit and the base unit.

According to another example embodiment, a method for providing a sealing is provided, the method comprising: providing a tubular casing unit comprising a first tubular portion and a second tubular portion having different maximum outer diameters and a sealing ridge shaped as a collar that radially extends from an outer side of the tubular casing unit, wherein the sealing ridge is configured to at least partially deform in response to a threshold-exceeding force being applied thereto; providing a base unit for receiving the tubular casing unit, the base unit comprising a recess portion arranged for receiving the tubular casing unit via its first end and, having, in its second end, an aperture configured to allow for the first tubular portion to at least partially protrude therethrough, wherein the recess portion has a shape and size configured to accommodate the sealing ridge and the second tubular portion in a concentric manner; inserting the tubular casing unit into the recess portion such that the sealing ridge is placed against its second end and that the first tubular portion at least partially protrudes through the aperture; and exerting a force that presses the sealing ridge against the second end of the recess portion, thereby forming a gas-tight seal between the tubular casing unit and the base unit.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A schematically illustrates some components of a sealing assembly according to an example;
Figure 1B schematically illustrates some components of a sealing assembly according to an example;
Figure 2 schematically illustrates a sealing assembly according to an example;
Figure 3 schematically illustrates a detail of a sealing assembly according to an example; and
Figure 4 illustrates a method according to an example.

### DESCRIPTION OF SOME EMBODIMENTS

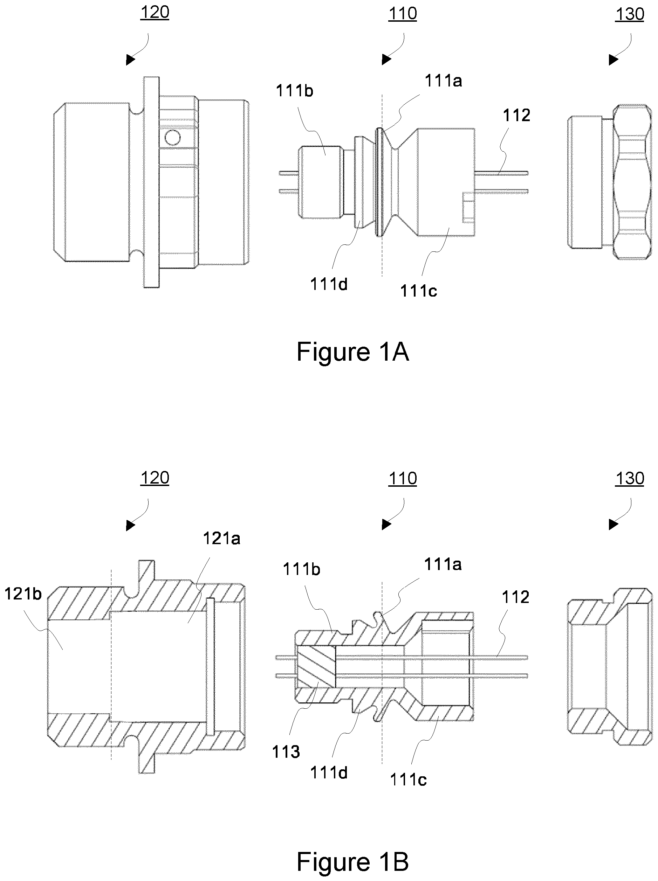

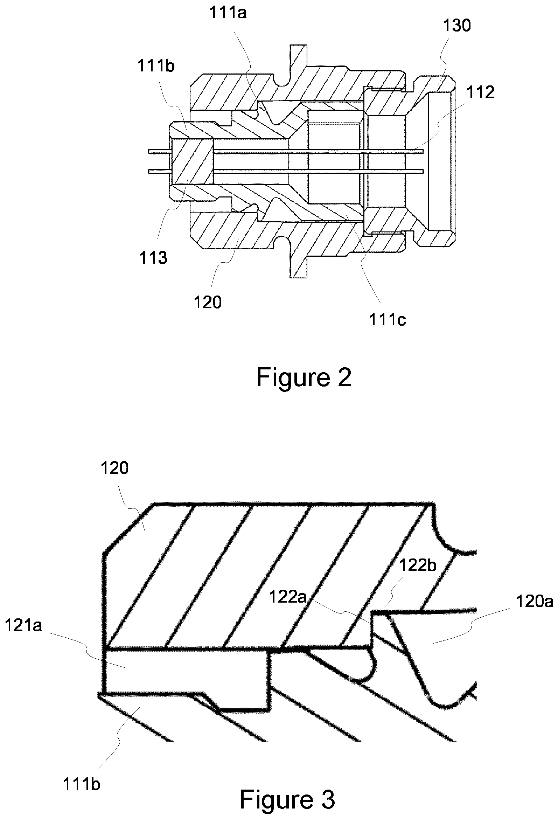

Figures 1A, 1B and 2 schematically illustrate some components of an exemplifying sealing assembly 100 according to the present disclosure. In particular, Figure 1A schematically illustrates a tubular casing unit 110, a base unit 120 and a locking member 130, whereas 1B schematically illustrates respective cross-sections of the tubular casing unit 110, the base unit 120 and the locking member 130. Moreover, Figure 2 schematically illustrates a cross-section of the sealing assembly 100 with the tubular casing unit 110 inserted into its position within the base unit 120 and with locking member 130 mounted to the base unit 120 to secure the tubular casing unit 110 in its position within the base unit 120, thereby providing a gas-tight seal between the tubular casing unit 110 and the base unit 120. It is worth noting that the schematic illustrations provided in Figures 1A, 1B and 2 represent just one way of embodying the tubular casing unit 110, the base unit 120 and the locking member 130, which is applied herein to facilitate description of various aspects of structure and operation of the sealing assembly 100 according to the present disclosure via examples provided in the following. Hence, any details of these illustrations are not to be construed as limitations concerning e.g. respective shapes and sizes of the tubular casing unit 110, the base unit 120 and/or the locking member 130 while various modifications are possible without departing from the scope of the sealing assembly 100 according to the present disclosure.

The tubular casing unit 110 illustrated in Figures 1A and 1B comprises a first tubular portion 111b and a second tubular portion 111c that have respective maximum outer diameters that are different from each other. **The** first tubular portion 111b and the second tubular portion 111c are provided along a common axis and the hence serve as respective tube sections that have different maximum outer diameters. **In** this regard, the maximum outer diameter of the second tubular portion 111c is larger than the maximum outer diameter of the first tubular portion 111a. **In** the illustrations of Figures 1A and **1B****,** the horizontal dashed line indicates the boundary between the first and second tubular portions 111b, 111c. **It** is worth noting that the division to the first and second tubular portions 111b, 111c is a conceptual one, and in a typical implementation the first and second tubular portions 111b, 111c are respective portions of a single-piece tubular element, which is shaped such that the first and second tubular portions 111b, 111c according to the present disclosure are formed.

The tubular casing unit 110 further comprises a sealing ridge 111a, which is shaped as a collar that radially extends from an outer side of the tubular casing unit 110 and encircles the tubular casing unit 110. The sealing ridge 111a may be also referred to as a sealing lip or as a sealing wing. The sealing ridge 111a may be considered to form or to be arranged at the boundary between the first tubular portion 111b and the second tubular portion 111c. The sealing ridge 111a is configured to at least partially deform in response to a threshold-exceeding force being applied thereto. Although described herein as a dedicated structural element of the tubular casing unit 110, in a typical implementation the sealing ridge 111a is an integral part of a single-piece tubular element, which is (further) shaped such that the sealing ridge 111a according to the present disclosure is formed on its outer surface. According to an example, the sealing ridge 111a, or the first tubular portion 111b in its entirety, is made of material that exhibits plastic deformation upon the threshold-exceeding force being applied thereto. In this regard, the threshold depends on the shape of the sealing ridge 111a and the material of the sealing ridge 111a.

The base unit 120 illustrated in Figures 1A and 1B is provided for receiving the tubular casing unit 110. In this regard, the base unit 120 comprises a recess portion 121a that is arranged for receiving the tubular casing unit 110 via its first end (which is at the right side of the base unit 120 in the respective illustrations of 1A and 1B). The first end of the recess portion 121a may be also considered as the first end of the base unit 120. The recess portion 121a has a shape and size that are configured to accommodate the sealing ridge 111a and the second tubular portion 110c of the tubular casing portion 110 in a concentric manner when they are inserted thereto via the first end of the recess portion 121. A second end of the recess portion 121a, (which is indicated as a vertical dashed line in the respective illustration of Figure 1B and) which is opposite to its first end, comprises an aperture 121b that is configured to allow for the first tubular portion 111b of the tubular casing unit 110 at least partially protrude therethrough when inserted to the recess portion 121a. In contrast, the aperture 121b is configured not to allow the sealing ridge 111a to enter the aperture 121b. In this regard, the aperture 121b through the second end of the recess portion 121a has a size and shape that enable the first tubular portion 111b to at least partially protrude therethrough but that do not allow the sealing ridge 111a to enter the aperture 121b. Hence, the tubular casing unit 110 may be inserted into the recess portion 121a from its first end such that first tubular portion 110b enters the aperture 121b and at least partially protrudes therethrough when the tubular casing unit 110 inserted into the recess portion 121a such that the sealing ridge 111a is positioned against the second end of the recess portion 121a. Herein, the second end of the recess portion 121a may be also referred to as a 'bottom' of the recess portion 121a.

The locking member 130 also illustrated in Figures 1A and 1B enables exerting a force that presses the sealing ridge 111a against the second end of the recess portion 121a when the tubular casing unit 110 is inserted into the recess portion 121a in order to form the gas-tight seal between the tubular casing unit 110 and the base unit 120 by a gas-tight sealing contact formed between the sealing ridge 111a and the recess portion 121a. **In** particular, the locking member 130 may be mounted to the first end of the base unit 120 to push the tubular casing unit 110 towards the bottom of the recess portion 121a, thereby pressing the sealing ridge 111a against the bottom of the recess portion 121a to exert (and maintain) a force that results in a partial deformation of the sealing ridge 111a, as illustrated in Figure 2. This results in providing the gas-tight seal via the sealing contact formed between the sealing ridge 111a and the recess portion 121a.

The maximum diameter of the first tubular portion 111b allows for its entry to the aperture 121b, whereas the first tubular portion 111b has a length (in its axial direction) that makes it at least partially protrude through the aperture 121b when the tubular casing unit 110 is inserted into the recess portion 121a of the base unit 120 such that the sealing ridge 111a is placed against the second end (i.e. against the bottom) of the recess portion 121a. Hence the maximum diameter of the first tubular portion 111a is smaller than the diameter of the sealing ridge 111a.

In the example shown in Figures 1A and 1B, the first tubular portion 111a is further provided with a fitting collar 111d that radially extends from the outer side of the first tubular portion 111b and that encircles the first tubular portion 111b. Along the lines described above for the sealing ridge 111a, although described herein as a separate structural element of the tubular casing unit 110, also the fitting collar 111d is typically implemented as an integral part of a single-piece tubular element, which is (further) shaped such that the fitting collar 111d is formed on its outer surface. Herein, the maximum diameter of the first tubular portion 111a may be that of the fitting collar 111d, which has an outer surface that follows the shape and size of the aperture 121b in size that is just marginally smaller than the outline of the aperture 121b. Consequently, the fitting collar 111d facilitates insertion of the tubular casing unit 110 into the recess 121a in a concentric manner while it also serves to protect the gas-tight seal (to be) formed between the sealing ridge 111a and the recess portion 121a via at least partially closing the remaining part of the aperture 121b around the first tubular portion 111b. In other examples, the first tubular portion 111a may be provided without the fitting collar 111d and/or with any other extensions from its outer side.

In various examples, the cross-section of the sealing ridge 111a may have any suitable shape, as long as it enables making the gas-tight sealing contact with the base portion 120 when pressed against the bottom (i.e. the second end) of the recess portion 121a. In a non-limiting example, the sealing ridge 111a is provided as a radially extending rim whose cross-section is substantially constant with a curved distal end that facilitates making a reliable sealing contact when pressed against the recess portion 121a with a sufficient force. In another non-limiting example, the sealing ridge 111a has a wedge-like cross-section that becomes narrower with an increasing distance from the (conceptual) axis of the tubular casing unit 110 with a curved distal end. In some examples, the sealing ridge 111a radially extends in an oblique angle from the outer side of the tubular casing unit 110 such the sealing ridge 111a is inclined in a direction opposite to that of the second tubular portion 111c (i.e. the sealing ridge 111a is inclined in a direction away from the second tubular portion 111c), thereby forming a groove between the distal end of the sealing ridge 111a and the 'body' of tubular casing unit 110. Such an inclination makes the sealing ridge 111a to further extend towards the bottom of the recess portion 121a when inserting the tubular casing unit 110 into the recess portion 121a, thereby facilitating formation of a reliable sealing contact between the sealing ridge 111a and the recess portion 121a.

Along the lines described above, the sealing ridge 111a is designed to exhibit plastic deformation when pressed at the threshold-exceeding force against the bottom of the recess portion 121a in order to form the gas-tight seal between the tubular casing unit 110 and the base unit 120. Figure 3 schematically illustrates formation of the sealing contact between the sealing ridge 111a and the recess portion 121a according to a non-limiting example via partial enlargement of Figure 2. In particular, Figure 3 illustrates a detail of the tubular casing unit 110 being inserted all the way into the recess portion 121a of the base unit 120 such that the sealing ridge 111a concentrically meets the bottom of the recess portion 121a and, subsequently, a threshold-exceeding force being applied to the sealing ridge 111a via pressing it against the second end of the recess portion 121a. Therefore, plastic deformation of the sealing ridge 111a that results in respective sealing contacts between the sealing ridge 111a and the bottom of the recess portion 121a and between the sealing ridge 111a and a side surface (i.e. a side wall) of the recess portion 121a has occurred.

In this regard, plastic deformation of the sealing ridge 111a due to the threshold-exceeding force applied thereto when concentrically meeting the bottom of the recess portion 121a involves bending (or flexing) of the sealing ridge 111a towards the second tubular portion 111c of the tubular casing unit 110, thereby bringing the distal end of the sealing ridge 112a further away from the axis of the tubular casing unit 110 and hence closer to the side surface of the recess portion 121a. Continued application of the threshold-exceeding force results in the bending (or flexing) of the sealing ridge 111a to an extent that causes its distal end to be pressed against the side surface of the recess portion 121, thereby causing deformation of the distal end of the sealing ridge 111a to form the gas-tight seal via a first sealing contact 122a with the second end of the recess portion 121a and via a second sealing contact 122b with the side surface of the recess portion 121a. In some examples, the bending (or flexing) of the sealing ridge 111a may also result in minor deformation of the first and/o second tubular portions 111b, 111c of the tubular casing unit 110 in proximity of the sealing ridge 110 and/or minor deformation of the bottom and/or the side surface of the recess portion 121a.

In the example illustrated in and described above with references to Figures 2 and 3, the tubular casing unit 110 and the base unit 120 are configured to form the respective sealing contacts 122a, 122b between the sealing ridge 111a and the second end of the recess portion 121a and between the sealing ridge 111a and the side surface of the recess portion due to the plastic deformation of the sealing ridge 111a. In other examples, the tubular casing unit 110 and the base unit 120 are configured to form only the first sealing contact 122a between the sealing ridge 111a and the second end of the recess portion 121a or to form only the second sealing contact 122b between the sealing ridge 111a and the side surface of the recess portion 121a.

The respective illustrations in Figures 1A, 1B and 2 further illustrate an opening through the tubular casing unit 110 in an axial direction with one or more contact pins 112 extending through the opening. The one or more contact pins 112 are made of electrically conducting material and they represent an electrical connection through the tubular casing 110, whereas in other examples respective electrical connectors of any suitable kind may be applied for the purpose instead of the one or more contact pins 112. The respective illustrations of Figures 1B and 2 further illustrate a sealing member 113 arranged in the opening through the tubular casing unit 110 such that it seals the opening in a gas-tight manner. The sealing member 113 is made of an electrically insulating material, such as glass. Due to the one or more electrical connectors provided through the tubular casing unit 110 in the axial direction, the sealing assembly 100 according to the example illustrated in Figures 1A, 1B and 2 may be also referred to as a gas-tight electrical feedthrough.

Along the lines described in the foregoing, at least the sealing ridge 111a is made of material that exhibits plastic deformation in response to a threshold-exceeding force being applied thereto. Moreover, in various examples, the sealing ridge 111, the first tubular portion 111b and the second tubular portion 111c are made of the same material, while typically these components of the tubular casing unit 110 are provided as respective portions of a single-piece tubular element, which is shaped such that the first and second tubular portions 111b, 111c and the sealing ridge 111a according to the present disclosure are formed. Yet further, the base unit 120 is typically likewise made of the same material as the sealing ridge 111a or the tubular element applied to provide the first and second tubular portions 111b, 111c and the sealing ridge 111a (as the case may be). Non-limiting examples of a suitable material include plastics and metals of various kinds, such as stainless steel (e.g. type 316L).

Along the lines described in the foregoing, the locking member 130 is mountable to the first end of the base unit 120 to push the tubular casing unit 110 towards the bottom of the recess portion 121a, thereby pressing the sealing ridge 111a against the bottom of the recess portion 121a to exert (and maintain) a force that results in a partial deformation of the sealing ridge 111a in order to create and maintain the gas-tight seal between the tubular casing unit 110 and the base unit 120. **In** a locked configuration, the locking member 130 is held in its position at the first end of the base unit 120 to allow for engagement of the tubular casing unit 110 in its position within the base unit 120. **In** some examples, the locking member 130 is further configured to be dismountable from the base portion 120 to release the tubular casing unit 110 from the base unit 120.

According to an example in this regard, a portion of the base unit 120 adjacent to its first end comprises a (first) threaded portion for receiving the locking member 130 provided with a matching (second) threaded portion, thereby enabling exerting the force that presses the sealing ridge 111a against the second end of the recess portion 121a via a rotary motion of the locking member 130 in a first direction while enabling releasing the sealing via a rotary motion of the locking member 130 in the opposite direction. Moreover, the locking member 130 has an opening therethrough to facilitate passing thorough the one or more contact pins 112 (or electrical connectors of other kind) or to enable making electrical contacts to the one or more contact pins 112 (or electrical connectors of other kind) through the locking member 130.

In the example illustrated with Figures 1A, 1B and 2, the locking member 130 is provided as a locking nut that has an opening therethrough in its axial direction and that has the (second) threaded portion provided on its outer surface with the (first) threaded portion of the base portion provided on the side surface of the recess portion 121a adjacent to its first end. In another example, the locking nut has the (second) threaded portion provided on the surface of the opening therethrough with the (first) threaded portion of the base portion provided on an outer surface of the base unit 120. In both these examples the locking nut is designed such that a portion of the locking nut sets against the second tubular portion 111c when the tubular casing unit 110 is inserted into the recess portion 121a and the locking nut is mounted to the first end of the base unit 120, the rotation of the locking nut to the first direction thereby pushing the sealing ridge 111a of the tubular casing unit 110 against the bottom of the recess portion 121a.

In further examples, a locking member 130 different from the locking nut may be applied, e.g. one that has fastening means different from thread arrangement described int eh examples above. As an example in this regard, the locking member 130 and/or the base unit 120 may be provided with a clamping arrangement that enables mounting the locking member 130 to the first end of the base unit 120 to exert (and maintain) a force that results in a partial deformation of the sealing ridge 111a in order to create and maintain the gas-tight seal between the tubular casing unit 110 and the base unit 120 while it also enables dismounting the locking member 130 to the first end of the base unit 120 to release the tubular casing unit 110 from the base unit 120. In a variation of this example, the locking member 130 may comprise a clamping arrangement provided in the base unit 120, where the clamping arrangement is applicable for pressing the tubular casing unit 120 against the bottom of the recess portion 121a. In a further example, the locking member 130 may be provided as a press-fit assembly that keeps the tubular casing unit 110 firmly in its position within the base unit 120 once inserted therein and pressed towards the bottom of the recess portion 121a at a sufficient force.

In some examples, at least one of the tubular casing unit 110 and the base unit 120 is provided with an insertion depth control mechanism that prevents application of excessive force to the sealing ridge 111a, thereby avoiding a scenario where the force applied to the sealing ridge 111a would result in its breakage rather than formation of the gas-tight seal due to plastic deformation. As an example, the insertion depth control mechanism may comprise a structural feature of the tubular casing unit 110, a structural feature of the base unit 120, or a respective structural feature in both the tubular casing unit 110 and the base unit 120 that prevents from inserting the tubular casing unit 110 into the recess portion 121a beyond a predefined maximum insertion depth. In a non-limiting example, such a structural feature may be provided as a flange extending from an outer side of the second tubular portion 111c, where the flange has a diameter that prevents it from entering the recess portion 121a and the flange is positioned along the axis of the tubular casing unit 110 with respect to the sealing ridge 111a such that insertion of the tubular casing unit 110 into the recess portion 121a beyond the predefined maximum insertion depth is prevented.

The electrical connection through the tubular casing unit 110 provided by the one or more electrical connectors (e.g. the one or more contact pins 112) may be applied to provide an electrical connection between a special atmosphere (such as a vacuum or otherwise controlled atmosphere) and a surrounding atmosphere (e.g. ambient air). As an example in this regard, the sealing assembly 100 may be employed as part of a system that further comprises one or more first apparatus that are electrically coupled to the one or more electrical connectors at a first end of the tubular casing unit 110 and one or more second apparatuses electrically coupled to the one or more electrical connectors at a second end of the tubular casing unit 110. Hence, the one or more electrical connectors may transfer of control information and/or data between the first and second apparatuses and/or supply of operating power from the one or more second apparatuses to the one or more first apparatuses or vice versa.

In an example, a system of above-described kind may by provided as a measurement system where the one or more first apparatuses comprise one or more sensors arranged to provide respective electrical signals that are descriptive of respective environmental characteristics in their operating environment to the one or more second apparatuses. Herein, in one example, the one or more sensors may be operated in a controlled atmosphere required for carrying out the measurements in a reliable manner while the one or more second apparatuses may be operated in an uncontrolled atmosphere (such as ambient air), whereas in other example the one or more sensors may be operated in a environment of unknown characteristics (that is potentially harmful for operation of the one or more second apparatuses) with the one or more second apparatuses provided in a controlled atmosphere that ensures their safe operation.

The examples described above with references to the exemplifying sealing assembly 100 illustrated in Figures 1A, 1B and 2 include the electrical connection trough the tubular casing assembly 110 via the one or more contact pins 112 or via electrical connectors of other kind. In other examples, the tubular casing unit 110 may be provided without the electrical connection therethrough, thereby only providing the gas-tight sealing. As an example in this regard, the tubular casing unit 110 may be provided as a solid element that does not has an opening therethrough, whereas in another example the opening through the tubular casing 110 may be blocked at one end, at both ends, or at least in one position between its first and second ends. In the latter examples, the blocking may be provided with the sealing member 113 of the kind described above (but without openings that allow for the contact pins 112 or electrical connectors of other kind to pass through) or the blocking may be provided by one or more blocking elements that are made of the same material as the tubular element applied to provide the first and second tubular portions 111b, 111c and that are formed as respective integral parts of said tubular element.

The examples described in the foregoing describe various elements of the tubular casing unit 110 as well as the recess portion 121a and the opening 121b of the base unit 120 without explicit references to their cross-sectional shapes. In the example illustrated via Figures 1A, 1B and 2, the following applies:
- The aperture 121b through the second end of the recess portion 121a has a circular or substantially circular outline and the first tubular portion has a circular or substantially circular cross-section with a maximum diameter that allows for entry to the aperture 121b.
- The sealing ridge 111a has a circular or substantially circular outline and the recess portion 121a has a cylindrical or substantially cylindrical cross-section having a size that enables movement of the sealing ridge 111a along the axial direction of the cylindrical recess portion 121a between its first and second ends. Moreover, typically, the cross-sectional shape of the cylindrical recess portion 121a has a size that is just marginally wider than the outline of the sealing ridge 111a to ensure that deformation of the sealing ridge 111a upon pressing against the bottom of the recess portion 121a results in the deformed distal end of the sealing ridge 111a also making the sealing contact with the side surface of the recess portion 121a.

The above-described examples of the cross-sectional shapes are, however, non-limiting ones and different shapes are applicable without departing from the scope of the sealing assembly 100 according to the present disclosure. As an example in this regard, the second tubular portion 111c may have a cross-sectional shape different from a circular or substantially circular one, as long as it has an outline that can be accommodated within the recess portion 121a when inserted thereto. In another example, alternatively or additionally, the first tubular portion 111b may have a cross-sectional shape different from circular or substantially circular one, as long as its cross-sectional shape and the outline of the aperture 121b are matched with other such that movement of the first tubular portion 111b through the aperture 121b is enabled at least in one rotational position of the tubular casing unit 110 with respect to the base unit 120.

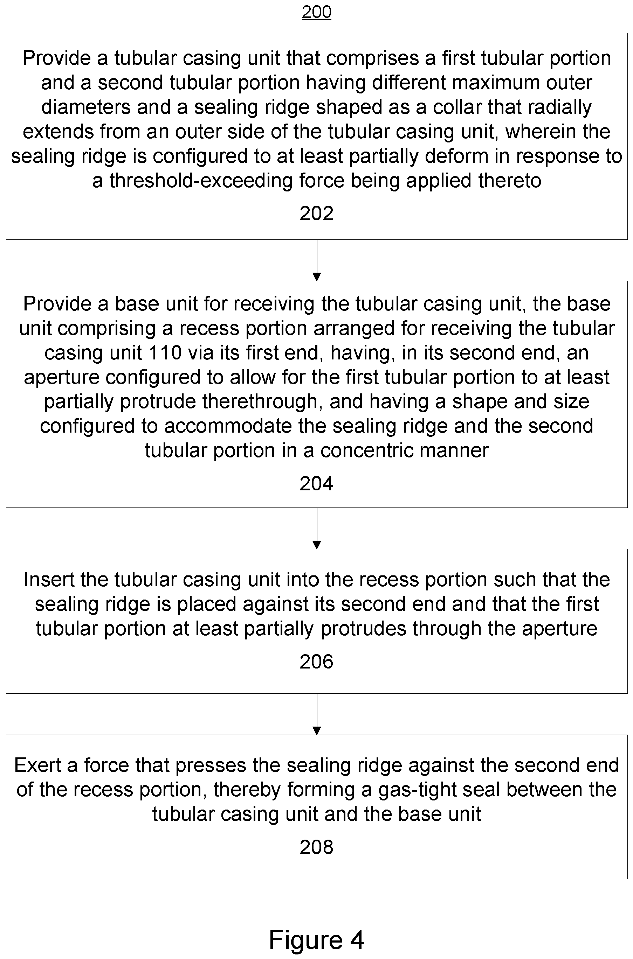

While described above via a plurality of examples that refer to structural characteristics of the sealing assembly 100, the aspect of using the tubular casing unit 110 and the base unit 120 to provide a gas-tight sealing may be also described as steps of a method, e.g. according to method 200 described in the following with references to Figure 4, which includes the following steps:
- providing the tubular casing unit 100 that comprises the first tubular portion 111b and the second tubular portion 111c having different maximum outer diameters and the sealing ridge 111a shaped as a collar that radially extends from an outer side of the tubular casing unit 110, wherein the sealing ridge 111a is configured to at least partially deform in response to a threshold-exceeding force being applied thereto (block 202);
- providing the base unit 120 for receiving the tubular casing unit 110, the base unit 120 comprising the recess portion 121a arranged for receiving the tubular casing unit 110 via its first end, having, in its second end, the aperture 121b configured to allow for the first tubular portion 111b to at least partially protrude therethrough, and having a shape and size configured to accommodate the sealing ridge 111a and the second tubular portion 111c in a concentric manner (block 204);
- inserting the tubular casing unit 110 into the recess portion 121a such that the sealing ridge 111a is placed against its second end and that the first tubular portion 111b at least partially protrudes through the aperture 121b (block 206); and
- exerting a force that presses the sealing ridge 111a against the second end of the recess portion 121a, thereby forming a gas-tight seal between the tubular casing unit 110 and the base unit 120 (block 208).

The method 200 may be complemented and/or varied in a number of ways without departing from the scope of the present disclosure, e.g. according to the examples described above with references to various structural aspects of the sealing assembly 100. In a particular example in this regard, the aspect of exerting the force to press the sealing ridge 111a against the second end (i.e. the bottom) of the recess portion 121a (cf. block 208), the method 200 may comprise mounting the locking member 130 at the first end of the base portion 120 and using the locking member 130 to exert the force that results in deformation of the sealing ridge 111a and, consequently, providing the gas-tight seal between the tubular casing unit 110 and the base unit 120.

The sealing assembly 100 according to the present disclosure enables the gas-tight seal that has tightness comparable that of a welding seam, whereas the disclosed approach enables conveniently opening the seal and reclosing the seal via application of the locking member 130. While the aspect of opening and reclosing the seal typically requires replacing the tubular casing unit 110 with a new one due to deformation of the sealing ridge 111a upon creating the gas-tight seal, this approach still enables reusing the base unit 120 for resealing. Moreover, the disclosed structure of the sealing assembly 120 allows for providing tubular casing units 110 of different kinds for use with the base unit 120 of a single kind, e.g. ones with our without the electrical connections therethrough and/or with electrical connections of different kinds, thereby also providing benefits in terms of a streamlined manufacturing process. Yet further, the locking-member-based sealing that does not require usage of welding or soldering equipment also enables relatively straightforward automation of the sealing as part of manufacturing devices that make use of the sealing assembly 100 according to the present disclosure.

## Claims

1. A sealing assembly (100) comprising:
a tubular casing unit (110) comprising a first tubular portion (111b) and a second tubular portion (111c) having different maximum outer diameters and a sealing ridge (111a) shaped as a collar that radially extends from an outer side of the tubular casing unit (110), wherein the sealing ridge (111a) is configured to at least partially deform in response to a threshold-exceeding force being applied thereto;
a base unit (120) for receiving the tubular casing unit (110), the base unit (120) comprising a recess portion (121a) arranged for receiving the tubular casing unit (110) via its first end and, having, in its second end, an aperture (121b) configured to allow for the first tubular portion (111b) to at least partially protrude therethrough, wherein the recess portion (121a) has a shape and size configured to accommodate the sealing ridge (111a) and the second tubular portion (111c) in a concentric manner; and
a locking member (130) for mounting to the first end of the base unit (120) to exert a force that presses the sealing ridge (111a) against the second end at the recess portion (121a) when the tubular casing unit (110) is inserted into the recess portion (121a), thereby forming a gas-tight seal between the tubular casing unit (110) and the base unit (120).

2. A sealing assembly (100) according to claim 1, wherein the maximum diameter of the first tubular portion (111a) allows for its entry to the aperture (121b) and the first tubular portion (111a) has a length that makes it at least partially protrude through the aperture (121b) when the tubular casing unit (110) is arranged in the recess portion (121a) such that the sealing ridge (111a) is placed against the second end at the recess portion (121a).

3. A sealing assembly (100) according to claim 1 or 2, wherein a distal end of the sealing ridge (111a) is arranged to form a first sealing contact (122a) with the second end at the recess portion (121a) and/or a second sealing contact (122b) with a side surface of the recess portion (121a), thereby forming said gas-tight seal.

4. A sealing assembly (100) according to any of claims 1 to 3, wherein the distal end of the sealing ridge (111a) has a curved cross-section to facilitate forming said gas-tight seal.

5. A sealing assembly (100) according to any of claims 1 to 4, wherein the sealing ridge (111a) extends in an oblique angle from the outer side of the tubular casing unit (110) such that the sealing ridge (111a) is inclined in a direction opposite to that of the second tubular portion (111c).

6. A sealing assembly (100) according to any of claims 1 to 5, wherein at least the sealing ridge (111a) is made of material that exhibits plastic deformation upon the threshold-exceeding force being applied thereto.

7. A sealing assembly (100) according to any of claims 1 to 6, wherein at least the first tubular portion (111b), the sealing ridge (111a) and the base unit (120) are made of a same material.

8. A sealing assembly (100) according to any of claim 7, wherein said material comprises metal.

9. A sealing assembly (100) according to any of claims 1 to 8, wherein the base portion (120) comprises a threaded portion for receiving the locking member (130) provided with a matching thread portion, thereby enabling exerting said force via a rotary motion of the locking member (130) with respect to the base portion (120).

10. A sealing assembly (100) according to any of claims 1 to 9, wherein the tubular casing unit (110) comprises an opening therethrough in an axial direction, one or more electrical connectors (112) that extend through the opening, and a sealing member (113) made of electrically insulating material arranged to seal rest of the opening in a gas-tight manner.

11. A sealing assembly (100) according to claim 10, wherein the one or more electrical connectors comprise one or more contact pins (112) arranged in the opening.

12. A sealing assembly (100) according to claim 10 or 11, wherein the sealing member (113) is made of glass.

13. A system comprising
a sealing assembly according any of claims 10 to 12; and
one or more first apparatuses electrically coupled to said one or more electrical connectors (112) at a first end of the tubular casing unit (110) for making an electrical contact to one or more second apparatuses electrically coupled to said one or more electrical connectors (112) at a second end of the tubular casing unit (110).

14. A system according to 13, wherein said one or more first apparatuses comprise one or more sensors arranged to provide respective electrical signals that are descriptive of respective environmental characteristics in their operating environment to the one or more second apparatuses.

15. A method (200) for gas-tight sealing, the method (200) comprising:
providing (202) a tubular casing unit (110) comprising a first tubular portion (111b) and a second tubular portion (111c) having different maximum outer diameters and a sealing ridge (111a) shaped as a collar that radially extends from an outer side of the tubular casing unit (110), wherein the sealing ridge (111a) is configured to at least partially deform in response to a threshold-exceeding force being applied thereto;
providing (204) a base unit (120) for receiving the tubular casing unit (110), the base unit (120) comprising a recess portion (121a) arranged for receiving the tubular casing unit (110) via its first end and, having, in its second end, an aperture (121b) configured to allow for the first tubular portion (111b) to at least partially protrude therethrough, wherein the recess portion (121a) has a shape and size configured to accommodate the sealing ridge (111a) and the second tubular portion (111c) in a concentric manner;
inserting (206) the tubular casing unit (110) into the recess portion (121a) such that the sealing ridge (111a) is placed against its second end and that the first tubular portion (111b) at least partially protrudes through the aperture (121b); and
exerting (208) a force that presses the sealing ridge (111a) against the second end of the recess portion (121a), thereby forming a gas-tight seal between the tubular casing unit (110) and the base unit (120).

## Amended claims

### Amended claims in accordance with Rule 137(2) EPC.

1. A sealing assembly (100) comprising:
a tubular casing unit (110) comprising a first tubular portion (111b) and
a second tubular portion (111c) having different maximum outer diameters and a sealing ridge (111a) shaped as a collar that radially extends from an outer side of the tubular casing unit (110), wherein the sealing ridge (111a) is configured to at least partially deform in response to a threshold-exceeding force being applied thereto;
a base unit (120) for receiving the tubular casing unit (110), the base unit (120) comprising a recess portion (121a) arranged for receiving the tubular casing unit (110) via its first end and, having, in its second end,
an aperture (121b) configured to allow for the first tubular portion (111b) to at least partially protrude therethrough, wherein the recess portion (121a) has a shape and size configured to accommodate the sealing ridge (111a) and the second tubular portion (111c) in a concentric manner; and
a locking member (130) for mounting to the first end of the base unit (120) to exert a force that presses the sealing ridge (111a) against the second end at the recess portion (121a) when the tubular casing unit (110) is inserted into the recess portion (121a), thereby forming a gas-tight seal between the tubular casing unit (110) and the base unit (120),
**characterized in that** the sealing ridge (111a) is made of material that exhibits plastic deformation upon the threshold-exceeding force being applied thereto and wherein a distal end of the sealing ridge (111a) is arranged to form a first sealing contact (122a) with the second end at the recess portion (121a) and/or a second sealing contact (122b) with a side surface of the recess portion (121a), thereby forming said gas-tight seal.

2. A sealing assembly (100) according to claim 1, wherein the maximum diameter of the first tubular portion (111a) allows for its entry to the aperture (121b) and the first tubular portion (111a) has a length that makes it at least partially protrude through the aperture (121b) when the tubular casing unit (110) is arranged in the recess portion (121a) such that the sealing ridge (111a) is placed against the second end at the recess portion (121a).

3. A sealing assembly (100) according to claim 1 or 2, wherein the distal end of the sealing ridge (111a) has a curved cross-section to facilitate forming said gas-tight seal.

4. A sealing assembly (100) according to any of claims 1 to 3, wherein the sealing ridge (111a) extends in an oblique angle from the outer side of the tubular casing unit (110) such that the sealing ridge (111a) is inclined in a direction opposite to that of the second tubular portion (111c).

5. A sealing assembly (100) according to any of claims 1 to 4, wherein at least the first tubular portion (111b), the sealing ridge (111a) and the base unit (120) are made of a same material.

6. A sealing assembly (100) according to any of claim 5, wherein said material comprises metal.

7. A sealing assembly (100) according to any of claims 1 to 6, wherein the base portion (120) comprises a threaded portion for receiving the locking member (130) provided with a matching thread portion, thereby enabling exerting said force via a rotary motion of the locking member (130) with respect to the base portion (120).

8. A sealing assembly (100) according to any of claims 1 to 7, wherein the tubular casing unit (110) comprises an opening therethrough in an axial direction, one or more electrical connectors (112) that extend through the opening, and a sealing member (113) made of electrically insulating material arranged to seal rest of the opening in a gas-tight manner.

9. A sealing assembly (100) according to claim 8, wherein the one or more electrical connectors comprise one or more contact pins (112) arranged in the opening.

10. A sealing assembly (100) according to claim 8 or 9, wherein the sealing member (113) is made of glass.

11. A system comprising
a sealing assembly according any of claims 8 to 10; and
one or more first apparatuses electrically coupled to said one or more electrical connectors (112) at a first end of the tubular casing unit (110) for making an electrical contact to one or more second apparatuses electrically coupled to said one or more electrical connectors (112) at a second end of the tubular casing unit (110).

12. A system according to 11, wherein said one or more first apparatuses comprise one or more sensors arranged to provide respective electrical signals that are descriptive of respective environmental characteristics in their operating environment to the one or more second apparatuses.

13. A method (200) for gas-tight sealing, the method (200) comprising:
providing (202) a tubular casing unit (110) comprising a first tubular portion (111b) and a second tubular portion (111c) having different maximum outer diameters and a sealing ridge (111a) shaped as a collar that radially extends from an outer side of the tubular casing unit (110),
wherein the sealing ridge (111a) is configured to at least partially deform in response to a threshold-exceeding force being applied thereto;
providing (204) a base unit (120) for receiving the tubular casing unit (110), the base unit (120) comprising a recess portion (121a) arranged for receiving the tubular casing unit (110) via its first end and, having, in its second end, an aperture (121b) configured to allow for the first tubular portion (111b) to at least partially protrude therethrough,
wherein the recess portion (121a) has a shape and size configured to accommodate the sealing ridge (111a) and the second tubular portion (111c) in a concentric manner;
inserting (206) the tubular casing unit (110) into the recess portion (121a) such that the sealing ridge (111a) is placed against its second end and that the first tubular portion (111b) at least partially protrudes through the aperture (121b); and
exerting (208) a force that presses the sealing ridge (111a) against the second end of the recess portion (121a), thereby forming a gas-tight seal between the tubular casing unit (110) and the base unit (120),
**characterized in that** the sealing ridge (111a) is made of material that exhibits plastic deformation upon the threshold-exceeding force being applied thereto and wherein a distal end of the sealing ridge (111a) forms a first sealing contact (122a) with the second end at the recess portion (121a) and/or a second sealing contact (122b) with a side surface of the recess portion (121a), thereby forming said gas-tight seal.
